# EUROPÄISCHE PATENTANMELDUNG

(11) **EP 1 431 627 A1**
(43) Veröffentlichungstag der Anmeldung: **23.06.2004**
(21) Anmeldenummer: 03027327.0
(22) Anmeldetag: 26.11.2003
(51) Int. Cl.: F16H 61/42

(54) **Regelvorrichtung für einen Hydromotor**

(30) Priorität: 18.12.2002 DE 10259315
(71) Anmelder: Brueninghaus Hydromatik GmbH, 89275 Elchingen (DE)
(72) Erfinder: Schniederjan, Reinhold, 89233 Neu-Ulm (DE); Müller, Norbert, 89233 Neu-Ulm (DE)
(74) Vertreter: Körfer, Thomas, Dipl.-Phys.

(57) **Zusammenfassung**

Die Erfindung betrifft eine Regelvorrichtung für einen Hydromotor (2), der in seinem Schluckvolumen einstellbar ist. Zur Verstellung des Schluckvolumens ist eine Verstellvorrichtung (7) mit zumindest einem ersten Druckraum (11, 11') vorgesehen, wobei der in dem ersten Druckraum (11, 11') wirkende Stelldruck mittels einer Stelldruckregelvorrichtung (6) veränderbar ist. Zum Einstellen des Stelldrucks ist der erste Druckraum (11, 11') über die Stelldruckregelvorrichtung veränderlich mit einem Tankvolumen (17) oder einer Druckmittelzuflussleitung (18) verbindbar, wobei die Druckmittelzuflussleitung (18) mit einer Druckmittelspülvorrichtung (13) des Hydromotors (2) verbunden ist.

## Beschreibung

Die Erfindung betrifft eine Regelvorrichtung für einen Hydromotor.

Eine Regelvorrichtung zum Einstellen eines in seinem Schluckvolumen veränderlichen Hydromotors ist z. B. aus der EP 0 615 588 B1 bekannt. Ein Verstellmechanismus des Hydromotors ist dabei an eine Stelleinheit angekoppelt, wobei die Stelleinheit im wesentlichen aus einem Stellzylinder sowie einem darin angeordneten Stellkolben besteht. Der Stellkolben teilt den Stellzylinder in einen ersten Druckraum und einen zweiten Druckraum auf, so dass durch eine Änderung des Drucks in dem ersten Druckraum bzw. dem zweiten Druckraum die Position des Stellkolbens und damit das Schluckvolumen des Hydromotors eingestellt werden können. Während der erste Druckraum über jeweils ein Rückschlagventil mit einer ersten und einer zweiten Hauptleitung verbunden ist und damit in dem ersten Druckraum jeweils der höhere der in den Hauptleitungen herrschenden Drücke eine hydraulische Kraft auf den Stellkolben ausübt, ist der in dem zweiten Druckraum herrschende Druck mittels eines Regelventils einstellbar, wobei das Regelventil den zweiten Druckraum hierzu in seinen beiden Endpositionen entweder mit dem Tankvolumen oder mit einer Druckmittelzuflussleitung verbindet.

Das Regelventil kann zwischen seinen beiden Endpositionen jede beliebige Zwischenstellung einnehmen, wobei es sich jeweils in einem Gleichgewichtszustand aus der Kraft einer Rückstellfeder und einer in entgegengesetzter Richtung wirkenden Kraft befindet, die sich aus einer hydraulischen Kraft und einer Kraft eines Elektromagneten zusammensetzt. Die Druckmittelzuflussleitung wird ebenfalls aus der jeweils den höheren Druck führenden Hauptleitung mit Druckmittel versorgt, so dass der zweite Druckraum mit dem Förderdruck der Hydropumpe, welche das Druckmittel in eine der beiden Hauptleitungen fördert, beaufschlagt werden kann.

Nachteilig an dem vorgeschlagenen System ist, dass sämtliche zur Verstellung des Hydromotors verwendeten Bauteile hochdruckfest ausgelegt sein müssen, da sowohl der erste als auch der zweite Druckraum mit dem Hochdruck einer der Hauptleitungen beaufschlagt wird. Neben den hohen Kosten, die damit verursacht werden, ist ein weiterer Nachteil, dass ein erheblicher Aufwand erforderlich ist, um eine langsame Verstellung des Hydromotors zu ermöglichen. Hierzu ist entweder eine abgestimmte Drosselstelle erforderlich, oder aber eine drosselnde Funktion der beiden Rückschlagventile.

Ein weiterer Nachteil ist, dass jeder Stellvorgang mit einem Verlust von Druckmittel verbunden ist. Die Entnahme des zur Verstellung erforderlichen Druckmittels erfolgt jeweils auf der stromaufwärts des Hydromotors gelegenen Seite, weswegen die entnommenen Menge an Druckmittel zum Antreiben des Hydromotors nicht mehr verfügbar ist. Durch diese geringfügige Reduzierung des Volumenstroms durch den Hydromotor kommt es zu einer leichten Absenkung der Drehzahl des Hydromotors und zu einer Verschlechterung des Wirkungsgrades des Antriebs.

Zudem ist bei Verwendung des von der Hochdruckseite abgegriffenen Druckmittels von Nachteil, dass sich die Drucksituation in Abhängigkeit von der jeweiligen Betriebssituation ändert. Dies bedeutet jedoch andererseits, dass die Verstellzeiten sich ebenfalls abhängig von der jeweiligen Betriebssituation des Antriebs verändern. Eine Auslegung der jeweiligen Stellglieder ist daher nur als Kompromiss an die zu erwartenden Betriebsdrücke möglich.

Der Erfindung liegt daher die Aufgabe zugrunde, eine Regelung für einen Hydromotor zu schaffen, bei dem die zur Verstellung benötigte Druckmittelmenge nicht zu einer Beeinflussung des Betriebs des Hydromotors führt.

Die Aufgabe wird durch die erfindungsgemäße Regelung für einen Hydromotor mit den Merkmalen nach Anspruch 1 gelöst.

Bei der erfindungsgemäßen Regelvorrichtung für einen Hydromotor wird das Druckmittel, welches zum Verstellen des Schluckvolumens des Hydromotors erforderlich ist, nicht aus der den Hochdruck führenden Leitung, sondern einer Spülvorrichtung entnommen, welche gezielt der Niederdruckseite eine definierte Menge an Druckmittel entnimmt. Durch die Entnahme des Druckmittels auf der bereits entspannten Seite des Druckmittelstroms wird verhindert, dass die Entnahme zu einer Veränderung des den Hydromotor durchströmenden Druckmittels führt. Der durch den Hydromotor geförderte Druckmittelfluss bleibt konstant, so dass keine Änderung der Drehzahl durch eine Verstellung des Schluckvolumens erfolgt. Eine Verschlechterung des Wirkungsgrades wird dabei ebenfalls unterbunden.

Durch die Entnahme des Druckmittels aus der Druckmittelspülvorrichtung wird außerdem das Druckmittel mit einem näherungsweise konstanten Druckniveau entnommen. Dadurch ist ein Abstimmen der an dem Verstellvorgang beteiligten Einrichtungen, wie z. B. dem Stellzylinder oder dem Stellkolben, besonders einfach. Eine zusätzliche Drosselung ist aufgrund des niedrigeren für den Stelldruck verantwortlichen Drucks nicht erforderlich, so dass sich ebenfalls in einfacher Weise langsame Stellbewegungen realisieren lassen. Wegen der druckunabhängigen Verstellzeiten lassen sich die Schwenkzeiten besser beeinflussen.

Die Unteransprüche betreffen vorteilhafte Weiterbildungen der erfindungsgemäßen Regelvorrichtung.

Insbesondere ist es vorteilhaft, eine Druckmittelspülvorrichtung vorzusehen, welche ein Spülventil umfasst. Durch die Verwendung eines solchen druckgesteuerten Spülventils wird automatisch diejenigen Hauptleitung mit der Druckmittelzuflussleitung verbunden, in der der niedrigeren Druck herrscht. Dies ist insbesondere auch dann der Fall, wenn während eines Verzögerungsvorgangs der Hydromotor als Pumpe wirkt und es dabei zu einer Umkehrung der Druckverhältnisse in den Hauptleitungen kommt, also die stromabwärts des Hydromotors gelegenen Hauptleitung den höheren Druck aufweist. Die bezüglich des als Pumpe arbeitenden Hydromotors stromabwärtige Hauptleitung stellt dabei den zur Betätigung des Spülventils erforderlichen Druck zur Verfügung. Aus dem hohen Druck der stromabwärtigen Hauptleitung wird kein Druckmittel entnommen.

Weiterhin ist es vorteilhaft, stromabwärts des Spülventils ein Druckregelventil einzusetzen, welches mit dem Tankvolumen in Verbindung steht. Durch den Einsatz eines solchen Druckregelventils steht für die Verstellvorrichtung ein näherungsweise konstanter Druck zur Verfügung. Zur Einstellung eines zur Verstellung geeigneten, bezüglich des Drucks des Tankvolumens höheren Drucks, der über die Druckmittelzuflussleitung der Verstellvorrichtung zur Verfügung gestellt werden kann, ist es besonders vorteilhaft, stromabwärts des Spülventils eine Drosselstelle vorzusehen. Vor der Drosselstelle staut sich das Druckmittel auf dem Weg in Richtung des Tankvolumens, so dass an dieser Stelle eine wegen des dadurch leicht erhöhten Drucks besonders geeignete Möglichkeit zur Entnahme des für einen Verstellvorgang benötigten Druckmittels ist.

Ausführungsbeispiele der erfindungsgemäßen Regelvorrichtung sind in der Zeichnung dargestellt und werden in der nachfolgenden Beschreibung näher erläutert. Es zeigen:
- Fig. 1: ein erstes Ausführungsbeispiel einer erfindungsgemäßen Regelvorrichtung für einen Doppelmotor, und
- Fig. 2: ein zweites Ausführungsbeispiel einer erfindungsgemäßen Regelvorrichtung für einen Doppelmotor.

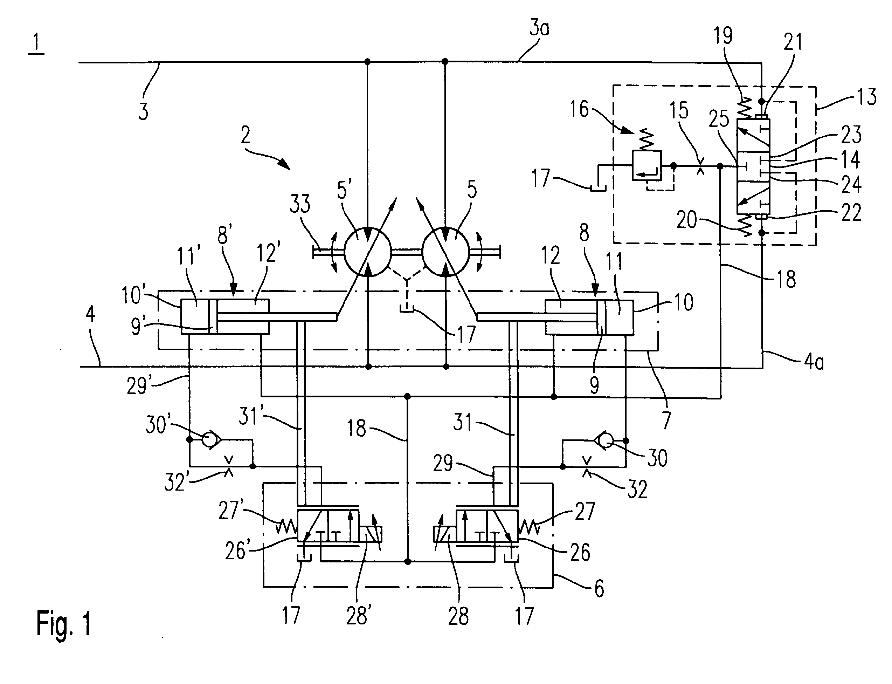

In der Fig. 1 ist eine Regelvorrichtung 1 für einen Hydromotor 2 gezeigt, der im dargestellten Ausführungsbeispiel als Doppelmotor ausgebildet ist. Der Hydromotor 2 ist an eine erste Hauptleitung 3 und eine zweite Hauptleitung 4 angeschlossen. In Abhängigkeit von der Förderrichtung einer nicht dargestellten Hydropumpe wird ein Druckmittel von der Hydropumpe entweder in die erste Hauptleitung 3 oder in die zweite Hauptleitung 4 gefördert, wodurch die Drehrichtung des Hydromotors 2 bestimmt wird.

Der als Doppelmotor ausgeführte Hydromotor 2 weist einen ersten Teilmotor 5 und einen zweiten Teilmotor 5' auf, die eine gemeinsame Abtriebswelle 33 antreiben. Der Hydromotor 2 ist in seinem Schluckvolumen veränderlich, wozu sowohl der erste Teilmotor 5 als auch der zweite Teilmotor 5' einstellbar sind. Zur Einstellung eines definierten Schluckvolumens wird über eine Stelldruckregelvorrichtung 6 ein in einer ersten Stelleinheit 8 wirkender Stelldruck geregelt. Die Stelleinheit 8 weist hierzu einen Stellkolben 9 auf, der in einem Stellzylinder 10 angeordnet ist und den Stellzylinder 10 in einen ersten Druckraum 11 und einen zweiten Druckraum 12 aufgeteilt. In Abhängigkeit von dem in dem ersten Druckraum 11 herrschenden Stelldruck sowie dem in dem zweiten Druckraum 12 herrschenden Gegendruck verändert der Stellkolben 9 seine Position und stellt somit das Schluckvolumen des ersten Teilmotors 5 ein.

Für den zweiten Teil Motor 5' ist eine zweite Stelleinheit 8' vorgesehen, die in ihrem Aufbau identisch mit der ersten Stelleinheit 8 ist und zusammen mit dieser eine Verstellvorrichtung 7 für den Hydromotor 2 ausbildet. Die entsprechenden Elemente der zweiten Stelleinheit 8' sind mit denselben, jedoch apostrophierten Bezugszeichen versehen, die bei der Erläuterung der ersten Stelleinheit 8 verwendet werden.

Das Druckmittel, dass zum Verstellen der ersten Stelleinheit 8 erforderlich ist, wird über eine Druckmittelspülvorrichtung 13 aus der ersten Hauptleitung 3 oder aus der zweiten Hauptleitung 4 entnommen. Hierzu sind die erste Hauptleitung 3 und die zweite Hauptleitung 4 an ein Spülventil 14 angeschlossen, das jeweils diejenigen erste oder zweite Hauptleitung 3 oder 4, in der der niedrigere Druck herrscht über eine Drossel 15 und ein Druckbegrenzungsventil 16 mit einem Tankvolumen 17 verbindet.

Während der erste Druckraum 11 der ersten Stelleinheit 8 über die Stelldruckregelvorrichtung 6 mit einem Stelldruck beaufschlagt wird, ist der zweite Druckraum 12 über eine Druckmittelzuflussleitung 18 direkt mit der Druckmittelspülvorrichtung 13 verbunden. Die Druckmittelzuflussleitung 18 entnimmt das für die erste Stelleinheit 8 benötigte Druckmittel stromaufwärts der Drossel 15. Stromaufwärts der Drossel 15 herrscht ein annähernd konstantes Druckniveau, welches durch das Druckbegrenzungsventil 16 eingestellt wird. Das Druckbegrenzungsventil 16 öffnet, wenn der stromabwärts der Drossel 15 sich einstellende Druck die Kraft einer auf das Druckbegrenzungsventil 16 wirkenden Feder übersteigt.

Das Spülventil 14 ist ein 3/3-Wegeventil, welches durch eine erste Zentrierfeder 19 und eine zweite Zentrierfeder 20 mit einer Rückstellkraft in Richtung seiner Mittelstellung beaufschlagt wird. Weiterhin weist das Spülventil 14 eine erste Messfläche 21 sowie eine zweite Messfläche 22 auf, die jeweils mit dem Druck der ersten Hauptleitung 3 über eine erste Verbindungsleitung 3a bzw. mit dem Druck der zweiten Hauptleitung 4 über eine zweite Verbindungsleitung 4a beaufschlagt sind. Bei Auftreten einer Druckdifferenz zwischen der ersten Hauptleitung 3 und der zweiten Hauptleitung 4 wird das Spülventil 14 aus seiner Mittelstellung heraus in eine erste oder eine zweite Schaltposition ausgelenkt. Während in seiner Mittelstellung ein mit der ersten Verbindungsleitung 3a verbundener erster Anschluss 23 sowie ein mit der zweiten Verbindungsleitung 4 verbundener zweiter Anschluss 24 keine Verbindung zu dem Ausgangsanschluss 25 aufweisen, wird bei Auslenken des Spülventils 14 aus seiner Mittelstellung in die erste oder zweite Schaltposition eine Verbindung zwischen dem ersten oder dem zweiten Anschluss 23 bzw. 24 und dem Ausgangsanschluss 25 hergestellt.

Übersteigt beispielsweise der in der ersten Hauptleitung 3 herrschende Förderdruck den Druck in der zweiten Hauptleitung 4, so wirkt auf die erste Messfläche 21 eine größere hydraulische Kraft als auf die zweite Messfläche 22 und das Spülventil 14 verbindet den zweiten Anschluss 24 mit dem Ausgangsanschluss 25. Wird also durch die nicht dargestellte Hydropumpe in die erste Hauptleitung 3 Druckmittel unter Druck gefördert, wie dies z. B. bei einer beschleunigten Fahrt oder einer Fahrt in der Ebene der Fall ist, so wird aus der stromabwärts des Hydromotors 2 gelegenen zweiten Hauptleitung 4 ein Teil des geförderten Druckmittels über die Druckmittelspülvorrichtung 13 in das Tankvolumen 17 geleitet. Dabei wird das im Beispiel der zweiten Hauptleitung 4 entnommene Druckmittel an der Drossel 15 gestaut, wobei stromaufwärts der Drossel 15 ein näherungsweise konstanter Druck durch das Druckbegrenzungsventil 16 erreicht wird.

Dieser näherungsweise konstante Druck, der beim Einsatz der erfindungsgemäßen Regelvorrichtung in einem geschlossenen Kreislauf etwa dem Speisedruck entspricht, setzt sich über die Druckmittelzuflussleitung 18 in den zweiten Druckraum 12 fort. Zum Regeln des Stelldrucks in dem ersten Druckraum 11 weist die Stelldruckregelvorrichtung 6 ein Druckregelventil 26 auf. Mittels des Druckregelventils 26 ist der erste Druckraum 11 in einer ersten Endposition mit dem Tankvolumen 17 und in einer zweiten Endposition mit der Druckmittelzuflussleitung 18 verbunden. Die Verstellung des Druckregelventils 26 erfolgt zwischen den beiden Endpositionen kontinuierlich. Über eine Druckfeder 27 wird das Druckregelventil 26 in seiner ersten Endposition gehalten, in der der erste Druckraum 11 über eine Stelldruckleitung 29 mit dem Tankvolumen 17 verbunden ist.

Zum Regeln der Position des Druckregelventils 26 wirkt entgegen der Kraft der Druckfeder 27 ein Proportionalmagnet 28, der über eine nicht dargestellte elektronische Steuereinheit mit einer Regelgröße beaufschlagt ist. Um beispielsweise das Schluckvolumen des ersten Teilmotors 5 in Richtung kleineren Schluckvolumens zu verstellen, muss der Stelldruck in dem ersten Druckraum 11 erhöht werden. Solange der Proportionalmagnet 28 stromlos ist, befindet sich das Druckregelventil 26 in seiner Ausgangsposition, die durch die Kraft der Druckfeder 27 vorgegeben ist. Der erste Druckraum 11 ist dann mit dem Tankvolumen 17 verbunden und der Stellkolben 9 wird durch die in dem zweiten Druckraum 12 auf den Stellkolben 9 wirkende Kraft in seine in der Fig. 1 rechte Endposition gebracht, in der der erste Teilmotor 5 ein maximales Schluckvolumen aufweist.

Durch Bestromen des Proportionalmagneten 28 wird das Druckregelventil 26 in Richtung seiner zweiten Endposition ausgelenkt, so dass die Stelldruckleitung 29 in Abhängigkeit von der auf den Proportionalmagneten 28 wirkenden Regelgröße zunehmend mit der Druckmittelzuflussleitung 18 verbunden wird. Das über die Druckmittelzuflussleitung 18 der Druckmittelspülvorrichtung 13 entnommene Druckmittel, welches der jeweils der niederdruckseitigen ersten oder zweiten Hauptleitung 3 oder 4 entnommen wird, strömt über ein in Richtung des ersten Druckraums 11 öffnendes Rückschlagventil 30 in den ersten Druckraum 11 und erhöht den dort auf den Stellkolben 9 wirkenden Stelldruck. Der maximal in dem ersten Druckraum 11 einstellbare Druck ist gleich groß wie der in dem zweiten Druckraum 12 herrschende Druck. Aufgrund der in dem ersten Druckraum 11 größeren mit Stelldruck beaufschlagten Fläche des Stellkolbens 9 wirkt auf den Stellkolben 9 eine resultierende Kraft, welche den ersten Teilmotor 5 in Richtung eines kleineren Schluckvolumens verstellt.

Die Änderung der Position des Stellkolbens 9 wird über eine Koppelstange 31 auf das Druckregelventil 26 rückgekoppelt. Damit wird der aufgrund einer zunehmenden Bestromung zunehmenden Verbindung der Druckmittelzuflussleitung 18 mit der Stelldruckleitung 29 entgegengewirkt, indem in dem dargestellten Ausführungsbeispiel durch die Koppelstange 31 die Ventilhülse so verschoben wird, dass der durchströmbare Querschnitt reduziert wird.

Eine Verstellung des ersten Teilmotors 5 in entgegengesetzter Richtung wird erreicht, indem die auf den Proportionalmagneten 28 wirkende Regelgröße reduziert wird, wodurch das Druckregelventil 26 durch die Druckfeder 27 in Richtung seiner ersten Endposition verstellt wird und der erste Druckraum 11 über eine Drosselstelle 32 und dass Druckbegrenzungsventil 26 in das Tankvolumen 17 entspannt wird. Die Drosselstelle 32 ist parallel zu dem Rückschlagventil 30 angeordnet und ermöglicht ein langsames Entspannen des Stelldrucks aus dem ersten Druckraum 11 in das Tankvolumen 17.

Während der Stelldruck, der in dem ersten Druckraum 11 herrscht, in das Tankvolumen 17 entspannt wird, wirkt in dem zweiten Druckraum 12 unverändert eine hydraulische Kraft auf den Stellkolben 9, der diesen in Richtung der in der Fig. 1 rechten Endposition bewegt. Diese Bewegung des Stellkolbens 9 ist mit einer Volumenzunahme des zweiten Druckraums 12 verbunden. Die aufgrund der Volumenzunahme benötigte Menge an Druckmittel wird über die Druckmittelzuflussleitung 18 nachgefördert, so dass zu jedem Zeitpunkt in dem zweiten Druckraum 12 der näherungsweise konstante Druck wie auch stromaufwärts der Drossel 15 wirkt. Dabei sichert die Entnahme des Druckmittels aus der Druckmittelspülvorrichtung 13, dass die stromaufwärts des Hydromotors 2 gelegene erste Hauptleitung 3 oder zweite Hauptleitung 4 einen Volumenstrom aufweist, der von der Entnahme des Druckmittels stromabwärts des Hydromotors 2 unbeeinflusst ist. Der unbeeinflusste Volumenstrom verhindert dabei eine ungewollte Änderung der Drehzahl des Hydromotors 2.

Anstelle des Proportionalmagneten 28 zur Betätigung des Druckregelventils 26 ist ebenso eine hydraulische Betätigung einsetzbar.

Die Stelldruckregelvorrichtung 6 weist zusätzlich zu dem Druckregelventil 26 ein weiteres Druckregelventil 26' auf, welches in Aufbau und Funktion dem Druckregelventil 26 entspricht und zum Regeln des Stelldrucks in dem ersten Druckraum 11' der zweiten Stelleinheit 8' vorgesehen ist, die wiederum den Schwenkwinkel des zweiten Teilmotors 5' einstellt. Sich entsprechende Bauteile sind wiederum mit denselben, bei der Beschreibung der Verstellung des ersten Teilmotors 5 verwendeten, jedoch apostrophierten Bezugszeichen versehen. Die Verwendung der in dem Ausführungsbeispiel dargestellten Regelvorrichtung hat speziell für die Verwendung von Doppelmotoren als Hydromotor 2 den Vorteil, dass ein Verlust an Wirkungsgrad durch die Entnahme des für die Verstellung erforderlichen Druckmittels auf der Niederdruckseite vermieden wird. Zudem ist insbesondere bei der Verwendung von Doppelmotoren zu berücksichtigen, dass eine Verdopplung der Anzahl an Dichtstellen auftritt. Daher ist durch die Verwendung des Niederdrucks zum Verstellen ein erhebliches Potential zum Einsparen der kostenintensiven Hochdruckdichtungen vorhanden.

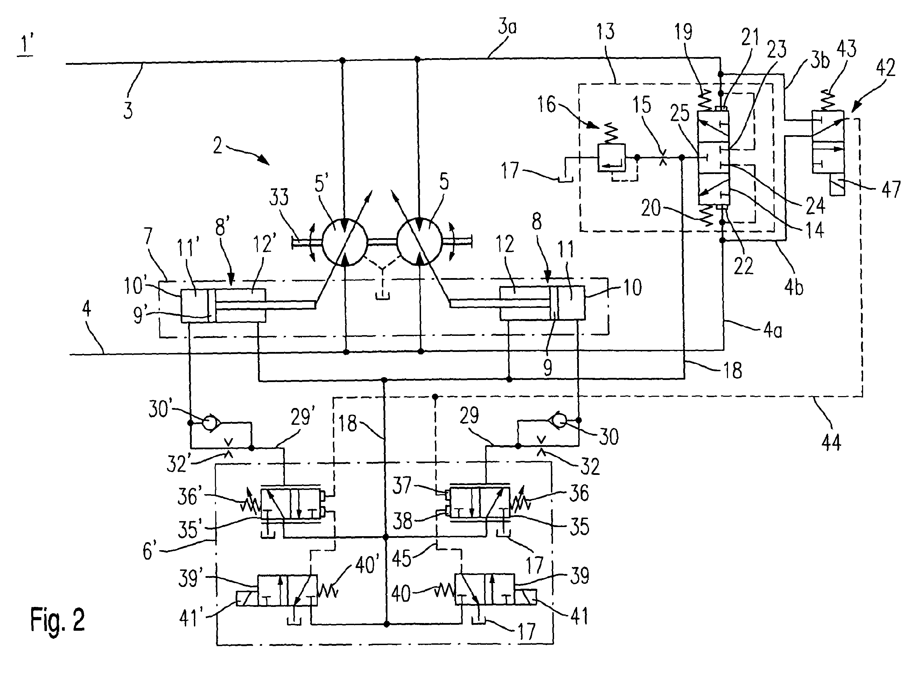

In der Fig. 2 ist ein zweites Beispiel für eine erfindungsgemäße Regelvorrichtung 1' dargestellt.

Diejenigen Elemente, die identisch mit denen aus dem ersten Ausführungsbeispiel sind, sind in der Fig. 2 mit identischen Bezugszeichen versehen. Um unnötige Wiederholungen zu vermeiden, wird auf eine erneute Beschreibung identischer Elemente verzichtet, sofern sie nicht zum Verständnis erforderlich ist.

Die Regelvorrichtung 1' des zweiten Ausführungsbeispiels umfasst eine Stelldruckregelvorrichtung 6', welche den Stelldruck in den ersten Druckräumen 11 bzw. 11' der ersten Stelleinheit 8 bzw. der zweiten Stelleinheit 8' regelt. Zum Regeln des Stelldrucks ist die Stelldruckregelvorrichtung 6' wie die Stelldruckregelvorrichtung 6 des ersten Ausführungsbeispiels symmetrisch aufgebaut. Die mit der zweiten Stelleinheit 8' zusammenwirkenden Bauteile des Stelldruckregelventils 6' sind erneut mit jeweils apostrophierten Bezugszeichen versehen, so dass die Beschreibung auf die mit der ersten Stelleinheit 8 des ersten Teilmotors 5 zusammenwirkenden Elemente beschränkt werden kann.

Zum Regeln des Stelldrucks in dem ersten Druckraum 11 der ersten Stelleinheit 8 weist die Stelldruckregelvorrichtung 6' ein hydraulisch betätigtes Druckregelventil 35 auf, welches mittels einer einstellbaren Feder 36 in seiner Ausgangsposition gehalten wird. In dieser Ausgangsposition wird die Druckmittelzuflussleitung 18 über die Stelldruckleitung 29 mit dem ersten Druckraum 11 verbunden. Wird der Stellkolben 9 durch den in dem ersten Druckraum 11 herrschenden Druck so verstellt, dass das Volumen des ersten Druckraums 11 zunimmt, so öffnet das in Richtung des ersten Druckraums 11 öffnende Rückschlagventil 30.

Um den in dem ersten Druckraum 11 herrschenden Stelldruck in Richtung des Tankvolumens 17 entspannen zu können, ist an dem Druckregelventil 35 eine Förderdruckmessfläche 37 ausgebildet, so dass eine an der Förderdruckmessfläche 37 angreifende hydraulische Kraft das Druckregelventil 35 entgegen der Kraft der einstellbaren Feder 36 verstellt. Wird das System nach einer Ruhephase in Betrieb genommen, wurde also noch kein Regeleingriff durchgeführt, so befindet sich der erste Teilmotor 5 in seiner Grundposition, in der er auf ein minimales Schluckvolumen geschwenkt ist, wobei sich der Stellkolben 9 in der Fig. 2 links befindet.

Gleichsinnig zu der Förderdruckmessfläche 37 ist an dem Druckregelventil 35 eine Übersteuerdruckmessfläche 38 ausgebildet. Die Übersteuerdruckmessfläche 38 ist über ein Übersteuerventil 39 mit dem Druck der Druckmittelzuflussleitung 18 beaufschlagbar. Das Übersteuerventil 39 wird mittels einer Druckfeder 40 in seiner Ruheposition gehalten, in der die Übersteuerdruckmessfläche 38 mit dem Tankvolumen 17 verbunden ist und auf die Übersteuerdruckmessfläche 38 kein Druck wirkt. Mittels eines Schaltmagneten 41 wird das Übersteuerventil 39 bei Bedarf aus der Ruheposition entgegen der Kraft der Druckfeder 40 in eine Schaltposition gebracht, in der die Druckmittelzuflussleitung 18 mit der Übersteuerdruckmessfläche 38 verbunden ist.

Während des normalen Betriebs befindet sich das Übersteuerventil 39 in seiner Ruheposition und der in dem ersten Druckraum 11 herrschende Steuerdruck wird über die sich einstellende Gleichgewichtsposition des Druckregelventils 35 bestimmt. Die Gleichgewichtsposition des Druckregelventils 35 ist durch die Kraft der einstellbaren Feder 36 sowie die in entgegengesetzter Richtung wirkende hydraulische Kraft an der Förderdruckmessfläche 37 bestimmt. Im dargestellten Ausführungsbeispiel ist eine hochdruckabhängige Regelung gezeigt. Hierzu wird der Druck der ersten Hauptleitung 3 oder der zweiten Hauptleitung 4 über ein Fahrtrichtungsventil 42 der Förderdruckmessfläche 37 zugeführt. In der im Ausführungsbeispiel dargestellten Position des Fahrtrichtungsventils 42, in der das Fahrtrichtungsventil 42 durch eine weitere Druckfeder 43 gehalten wird, ist die zweite Hauptleitung 4 über einen zweiten Hauptleitungsabschnitt 4b mit einer Förderdruckmessleitung 44 verbunden. Diese Position nimmt das Fahrtrichtungsventil 42 ein, wenn durch die nicht dargestellte Hydropumpe die zweite Hauptleitung 4 mit Druckmittel versorgt wird.

Solange sich das Fahrzeug nicht im Schiebebetrieb befindet, liegt dabei in der zweiten Hauptleitung 4 der von der Hydropumpe erzeugte Hochdruck an. Dieser Hochdruck wirkt über das Fahrtrichtungsventil 42 und die Förderdruckmessleitung 44 auch auf die Förderdruckmessfläche 37, so dass das Druckregelventil 35 eine Gleichgewichtsposition einnimmt, die durch die Kraft der einstellbaren Feder 36 und die entgegengerichtete hydraulische Kraft, die abhängig von dem in der zweiten Hauptleitung 4 herrschenden Hochdruck ist, bestimmt wird. Bei einer Zunahme des Drucks in der zweiten Hauptleitung 4 erhöht sich also die auf die Förderdruckmessfläche 37 wirkende Kraft. Die daraus resultierende Stellbewegung des Druckregelventils 35 bewirkt eine zunehmende Verbindung des ersten Druckraums 11 mit dem Tankvolumen 17.

Der Stelldruck in dem ersten Druckraum 11 wird dabei über die Drossel 32 in das Tankvolumen 17 entspannt, so dass die auf den Stellkolben 9 wirkende hydraulische Kraft des Stelldrucks abnimmt und die in dem zweiten Druckraum 12 wirkende Gegenkraft den Stellkolben 9 in Richtung eines größeren Schluckvolumens des ersten Teilmotors 5 verstellt. Ergibt sich eine solche Erhöhung des Drucks in der zweiten Hauptleitung 4 beispielsweise durch einen Anstieg, den das Fahrzeug hinauf fährt, so wird mit der beschriebenen Verstellung der Hydromotor 2 in Richtung eines größeren Schluckvolumens und damit gleichzeitig in Richtung eines größeren Drehmoments verstellt.

Die bei der beschriebenen Verstellung des ersten Teilmotors 5 auf Grund der Volumenvergrößerung des zweiten Druckraums 12 erforderliche Menge an Druckmittel wird wiederum stromaufwärts der Drossel der Druckmittelspülvorrichtung 13 dem Druckmittelkreislauf entnommen. Der Ausgangsanschluss 25 ist dabei wiederum mit der diejenigen Hauptleitung verbunden, in der der niedrigere Druck herrscht. Im vorangegangenen Beispiel wird also dass zur Verstellung der ersten Stelleinheit 8 benötigte Druckmittel der ersten Hauptleitung 3 entnommen. Anstelle des bereits erwärmten Druckmittels wird in den Kreislauf gekühltes Druckmittel nachgefördert, um so die entnommene Menge an Druckmittel auszugleichen und gleichzeitig den Wirkungsgrad zu erhöhen.

Das Umschalten des Fahrtrichtungsventils 42 erfolgt ausschließlich aufgrund der Förderung der Hydropumpe in die erste Hauptleitung 3 oder die zweite Hauptleitung 4. Dies hat zur Folge, dass bei einer Druckumkehr in den Hauptleitungen, wie sie beispielsweise bei einer Verzögerung oder einer Talfahrt vorkommt, der Druck in der stromaufwärts des Hydromotors 2 gelegenen ersten oder zweiten Hauptleitung 3,4 abnimmt und auf Grund der geringer werdenden hydraulischen Kraft an der Förderdruckmessfläche 37 das Druckregelventil 35 in Richtung seiner Ausgangsposition verstellt wird. Diese Verstellung bewirkt eine zunehmende Verbindung des ersten Druckraums 11 mit der Druckmittelzuflussleitung 18. Entsprechend der zunehmende Verbindung wird der Stelldruck in dem ersten Druckraum 11 erhöht und der erste Teilmotor 5 in Richtung eines verringerten Schluckvolumens verstellt.

Durch die Verstellung des ersten Teilmotors 5 in Richtung geringerer Schluckvolumens wird auch das Bremsmoment verringert. Insbesondere bei einer Bergabfahrt kann daher eine unerwünschte und unkontrollierte Beschleunigung des Fahrzeugs eintreten. Um dies zu verhindern, wird ein Schaltmagnet 41 des Übersteuerventils 39 betätigt und die Übersteuerdruckmessfläche 38 über eine Übersteuerdruckmessleitung 45 mit der Druckmittelzuflussleitung 18 verbunden. Die aufgrund der Druckumkehr reduzierte hydraulische Kraft, die an der Förderdruckmessfläche 37 angreift, wird dabei durch den in der Druckmittelzuflussleitung 18 herrschenden Druck und der sich daraus ergebenden hydraulischen Kraft an der Übersteuerdruckmessfläche 38 ergänzt.

An der Förderdruckmessfläche 37 und der Übersteuerdruckmessfläche 38 liegen bei einer solchen Druckumkehr in den Hauptleitungen identische Drücke an, da lediglich das Spülventil 14 durch die Druckumkehr betätigt wird. Das Fahrtrichtungsventil 42 wird dagegen über ein nicht dargestellte elektronisches Steuergerät betätigt und arbeitet in Abhängigkeit von der Fahrtrichtung. Im Anschluss an das zuvor beschriebenen Beispiel, bei dem die zweite Hauptleitung 4 von der Hydropumpe bedrückt wird und damit stromaufwärts des Hydromotors 2 angeordnet ist, ergibt sich bei einer Bergabfahrt oder Verzögerung des Fahrzeugs aufgrund der Druckumkehr, dass der in der ersten Hauptleitung 3 herrschende Druck größer wird als der in der zweiten Hauptleitung 4 herrschende Druck.

Während über das Fahrtrichtungsventil 42 unverändert die Förderdruckmessleitung 44 über den zweiten Hauptleitungsabschnitt 4b mit dem jetzt niedrigeren Druck der zweiten Hauptleitung versorgt wird, wechselt das Druckverhältnis an der ersten Messfläche 21 und der zweiten Messfläche 22 des Spülventils 14, so dass bei der Druckumkehr der zweiten Anschluss 24 mit dem Ausgangsanschluss 25 verbunden wird, da das Spülventil 14 in seine zweite Schaltposition gebracht wird. Durch die Verbindung des zweiten Anschlusses 24 mit dem Ausgangsanschluss 25 wird nun auch die Druckmittelzuflussleitung 18 aus der zweiten Hauptleitung 4 mit Druckmittel versorgt. Bei Betätigen des Schaltmagneten 41 wird daher auch die Übersteuerdruckmessleitung 45 und letztlich die Übersteuerdruckmessfläche 38 mit dem Druck der zweiten Hauptleitung 4 bedrückt.

Das Übersteuerventil 39 kann auch dann betätigt werden, wenn bei einer geringfügigen Verzögerung der Druck an der Förderdruckmessfläche 37 abnimmt und eine Verstellung des ersten Teilmotors 5 in Richtung kleinerer Schwenkwinkel nicht erwünscht ist. Durch Betätigung des Schaltmagneten 41 wirkt dann zusätzlich der Druck der jeweils stromabwärts des Hydromotors 2 gelegenen ersten oder zweiten Hauptleitung 3 oder 4, sofern die Verzögerung nicht ausreicht, um eine Druckumkehr in der ersten und zweiten Hauptleitung 3 und 4 zu bewirken.

Die vorgeschlagene Regelvorrichtung 1, 1' ist sowohl in einem offenen Kreislauf als auch in einem geschlossenen Kreislauf einsetzbar, wobei insbesondere in einem geschlossenen Kreislauf vorteilhaft genutzt werden kann, dass eine Entnahme von bereits erhitztem Druckmittel aus dem Kreislauf ohnehin erforderlich ist, um in den Kreislauf abgekühltes Druckmittel zurückführen zu können.

## Patentansprüche

1. Regelvorrichtung für einen Hydromotor (2), der in seinem Schluckvolumen einstellbar ist, wobei zur Verstellung des Schluckvolumens eine Verstellvorrichtung (7) mit zumindest einem ersten Druckraum (11, 11') vorgesehen ist und der in dem ersten Druckraum (11, 11') wirkende Stelldruck mittels einer Stelldruckregelvorrichtung (6, 6') veränderbar ist, über die der erste Druckraum (11, 11') zum Einstellen des Stelldrucks veränderlich mit einem Tankvolumen (17) oder einer Druckmittelzuflussleitung (18) verbindbar ist,
**dadurch gekennzeichnet,**
**dass** die Druckmittelzuflussleitung (18) mit einer Druckmittelspülvorrichtung (13) des Hydromotors (2) verbunden ist.

2. Regelvorrichtung nach Anspruch 1,
**dadurch gekennzeichnet,**
**dass** der Hydromotor (2) zwischen einer ersten Hauptleitung (3) und einer zweiten Hauptleitung (4) angeordnet ist, und
**dass** die Druckmittelspülvorrichtung (13) ein Spülventil (14) umfasst, dessen zwei Eingangsanschlüsse (23, 24) mit der ersten Hauptleitung (3) und der zweiten Hauptleitung (4) verbunden sind, wobei durch das Spülventil (14) jeweils diejenige Hauptleitung (3, 4) mit der Druckmittelzuflussleitung (18) verbunden ist, in der der niedrigere Druck herrscht.

3. Regelvorrichtung nach Anspruch 2,
**dadurch gekennzeichnet,**
**dass** stromabwärts des Spülventils (14) ein mit dem Tankvolumen (17) in Verbindung stehendes Druckregelventil (16) zum Erzeugen eines geregelten Spüldrucks vorgesehen ist.

4. Regelvorrichtung nach Anspruch 3,
**dadurch gekennzeichnet,**
**dass** die Druckmittelspülvorrichtung (13) zumindest eine Drossel (15) zum Begrenzen des Druckmittelspülflusses über das Druckregelventil (16) in das Tankvolumen (17) aufweist.

5. Regelvorrichtung nach Anspruch 3 oder 4,
**dadurch gekennzeichnet,**
**dass** die Druckmittelzuflussleitung (18) mit der Druckmittelspülvorrichtung (13) stromaufwärts der zumindest einen die Spülmenge begrenzenden Drossel (15) verbunden ist.

6. Regelvorrichtung nach einem der Ansprüche 1 bis 5,
**dadurch gekennzeichnet,**
**dass** ein zweiter Druckraum (12, 12'), der einen Stellkolben (9) entgegen der hydraulischen Kraft des Stelldrucks in dem ersten Druckraum (11, 11') mit einer hydraulischen Gegenkraft beaufschlagt, mit der Druckmittelzuflussleitung (18) verbunden ist.

7. Regelvorrichtung nach einem der Ansprüche 1 bis 6,
**dadurch gekennzeichnet,**
**dass** die Stelldruckregelvorrichtung (6) zumindest ein elektromagnetisch betätigtes Regelventil (26, 26') umfasst, über welches zum Einstellen des Stelldrucks in dem ersten Druckraum (11, 11') das Tankvolumen (17) oder die Druckmittelzuflußleitung (18) veränderlich mit dem ersten Druckraum (11, 11') verbindbar ist.

8. Regelvorrichtung nach Anspruch 7,
**dadurch gekennzeichnet,**
**dass** der eingestellte Schwenkwinkel des Hydromotors (2) so auf das Regelventil (26, 26') rückgekoppelt ist, dass eine Änderung des Schwenkwinkels seiner weiteren Verstellung entgegenwirkt.

9. Regelvorrichtung nach einem der Ansprüche 1 bis 6,
**dadurch gekennzeichnet,**
**dass** die Stelldruckregelvorrichtung (6') zumindest ein hydraulisch betätigtes Regelventil (35, 35') umfasst, über welches zum Einstellen des Stelldrucks in dem ersten Druckraum (11, 11') das Tankvolumen (17) oder die Druckmittelzuflußleitung (18) veränderlich mit dem ersten Druckraum (11, 11') verbindbar ist, wobei das zumindest eine hydraulisch betätigte Regelventil (35, 35') eine Förderdruckmessfläche (37, 37') und eine Übersteuerdruckmessfläche (38, 38') aufweist und die Förderdruckmessfläche (37, 37') mit einem in der ersten Hauptleitung (3) oder der zweiten Hauptleitung (4) herrschenden Druck und die Übersteuerdruckmessfläche (38, 38') mit dem Druck der Druckmittelzuflussleitung (18) beaufschlagbar ist.

10. Regelvorrichtung nach Anspruch 9,
**dadurch gekennzeichnet,**
**dass** die Übersteuerdruckmessfläche (38, 38') des hydraulisch betätigten Regelventils (35, 35') über ein elektromagnetisch betätigtes Übersteuerventil (39, 39') mit der Druckmittelzuflussleitung (18) oder dem Tankvolumen (17) verbindbar ist.

11. Regelvorrichtung nach Anspruch 9 oder 10,
**dadurch gekennzeichnet,**
**dass** die Förderdruckmessfläche (37, 37') des hydraulisch betätigten Regelventils (35, 35') über ein Fahrtrichtungsventil (42) mit der jeweils stromaufwärts des Hydromotors (2) gelegenen ersten Hauptleitung (3) oder zweiten Hauptleitung (4) verbunden ist.

12. Regelvorrichtung nach einem der Ansprüche 1 bis 11,
**dadurch gekennzeichnet,**
**dass** der Hydromotor (2) als Doppelmotor mit einem ersten Teilmotor (5) und einem zweiten Teilmotor (5') ausgebildet ist, dessen Verstellvorrichtung (7) eine erste Stelleinheit (8) für den ersten Teilmotor (5) und eine zweite Stelleinheit (8') für den zweiten Teilmotor (5') umfasst, die jeweils einen ersten Druckraum (11, 11') umfassen, wobei der jeweils erste Druckraum (11, 11') über die Stelldruckregelvorrichtung (6, 6') veränderlich mit dem Tankvolumen (17) oder einer Druckmittelzuflussleitung (18) verbunden ist und die Druckmittelzuflussleitung (18) mit einer Druckmittelspülvorrichtung (13) des Doppelmotors verbunden ist.

13. Regelvorrichtung nach Anspruch 12,
**dadurch gekennzeichnet,**
**dass** jeder Stelleinheit (8, 8') ein eigenes elektromagnetisch betätigtes Regelventil (26, 26') oder hydraulisch betätigtes Regelventil (35, 35') zugeordnet ist, über welches zum Einstellen des Stelldrucks in dem jeweils ersten Druckraum (11, 11') das Tankvolumen (17) oder die Druckmittelzuflußleitung (18) veränderlich mit dem jeweils ersten Druckraum (11, 11') verbindbar ist.

14. Regelvorrichtung nach Anspruch 13,
**dadurch gekennzeichnet,**
**dass** jedes hydraulisch betätigte Regelventil (35, 35') eine Förderdruckmessfläche (37, 37') aufweist, die mit einem in der ersten Hauptleitung (3) oder in der zweiten Hauptleitung (4) herrschenden Druck beaufschlagbar ist, und eine Übersteuerdruckmessfläche (38, 38') aufweist, die mit jeweils mit dem Druck der Druckmittelzuflussleitung (18) beaufschlagbar ist.

15. Regelvorrichtung nach Anspruch 14,
**dadurch gekennzeichnet,**
**dass** die Übersteuerdruckmessfläche (38, 38') jedes hydraulisch betätigten Regelventils (35, 35') mittels eines zugeordneten elektromagnetisch betätigten Übersteuerventils (39, 39') mit der Druckmittelzuflußleitung (18) oder dem Tankvolumen (17) verbindbar ist.

16. Regelvorrichtung nach Anspruch 14 oder 15,
**dadurch gekennzeichnet,**
**dass** die jeweilige Förderdruckmessfläche (37, 37') der hydraulisch betätigten Regelventile (35, 35') über ein Fahrtrichtungsventil (42) mit der jeweils stromaufwärts des Doppelmotors gelegenen ersten Hauptleitung (3) oder zweiten Hauptleitung (4) verbunden ist.
